Europäisches Patentamt

European Patent Office

Office européen des brevets

(19)

(11) **EP 0 370 514 B1**

(12) ## EUROPEAN PATENT SPECIFICATION

(45) Date of publication and mention
of the grant of the patent:
**31.01.1996  Bulletin 1996/05**

(51) Int Cl.[6]: **H04B 10/14**, H04B 10/18

(21) Application number: **89121698.8**

(22) Date of filing: **24.11.1989**

(54) **Optical communication system and communication method**

Optisches Übertragungssystem und Verfahren

Système de communication optique et procédé

(84) Designated Contracting States:
**BE DE FR GB IT**

(30) Priority: **25.11.1988 JP 297486/88**
                **23.12.1988 JP 325490/88**

(43) Date of publication of application:
**30.05.1990  Bulletin 1990/22**

(73) Proprietor:
**SUMITOMO ELECTRIC INDUSTRIES, LTD.
Osaka-shi, Osaka 541 (JP)**

(72) Inventors:
  • **Nishimura, Akira c/o Yokohama Works
    Sakae-ku, Yokohama-shi, Kanagawa (JP)**
  • **Suzuki, Shuzo c/o Yokohama Works
    Sakae-ku, Yokohama-shi, Kanagawa (JP)**
  • **Shigematsu, Masayuki c/o Yokohama Works
    Sakae-ku, Yokohama-shi, Kanagawa (JP)**

(74) Representative: **Grünecker, Kinkeldey,
    Stockmair & Schwanhäusser Anwaltssozietät
    D-80538 München (DE)**

(56) References cited:
    **EP-A- 0 048 640          GB-A- 2 187 056**

  • **PATENT ABSTRACTS OF JAPAN, vol. 7, no. 17
    (E-154)(1162), 22nd January 1983; & JP-A-57
    174 949 (NIPPON DENKI K.K.) 27-10-1982**
  • **PROCEEDINGS OF THE 9th EUROPEAN
    CONFERENCE ON OPTICAL COMMUNICATION
    - ECOC '83, 26th October 1983, pages 298-304,
    Geneva, CH; J.P. FRANKART et al.:"Analog
    transmission of TV-channels on optical fibers,
    with non-linearities correction by regulated
    feedforward"**

**Description**

BACKGROUND OF THE INVENTION

Field of the Invention

The present invention relates in general to optical communication. More particularly, the invention is directed to an optical communication system and an optical communication method. An optical signal is directly intensity-modulated by an analog signal and is transmitted through an optical communication means wherein the modulation distortion of signals being communicated is reduced by application of feedforward control.

Description of the Prior Art

With the development of optical fiber communication network, optical cable television (hereinafter CATV), wherein audio/video information is transmitted through an optical fiber instead of a coaxial cable, has been proposed. Using optical fibers permits transmission of an increased amount of information, enabling a large number of additional transmission channels as well as extended transmission distances.

Known transmission systems for optical CATV include a wideband frequency modulation method (hereinafter FM) and a vestigial sideband amplitude modulation system (hereinafter VSB/AM). An FM system is advantageous in that signal-to-noise ratio is large and intermodulation distortion is small, but requires an AM/FM converter for converting an electrical amplitude-modulated signal (hereinafter AM signal) into a frequency-modulated signal (hereinafter FM signal) when injecting the optical signal into the optical fiber as well as an FM/AM converter for converting the optical FM signal received over the optical fiber into the electrical AM signal. This necessarily gives rise to the overall high cost of the communication system. Conversely, VSB/AM system requires no converters as discussed above, thereby allowing both an inexpensive and simple construction of the communication system. With the VSB/AM system, the current injected into a light emitting element, for example, a semiconductor laser is directly modulated to produce the optical signal. However, the VSB/AM system suffers from a problem that the light output contains high order distortions that result in a poor CN (carrier-to-noise) ratio (equivalent to SNR, signal-to-noise ratio) since the injected current versus light output characteristic of the light emitting element such as the semiconductor laser is non-linear.

The amount of light output does not increase in proportion to the amount of current injected into the semiconductor but will contain the modulation distortion components proportional to the square of the injected current. Therefore, when transmitting information using a carrier frequency $f_1$, if the frequency components of $2f_1$, $3f_2$, $f_1+f_2$, $2f_1-f_2$, and so on are developed and these frequencies exist in the proximity of other frequencies, the modulation distortion components become a noise source for the other carrier frequencies to degrade the CN ratio thereof. Thus the following relation applies to transmitting picture information.

$$10 \cdot \log_{10} \text{(amplitude of carrier/amplitude of modulation distortion)} \geq 58 \text{ (dB)} \qquad (1)$$

According to this relation, it is necessary to restrict the number of channels for transmission. Two ways of preventing deterioration of CN ratio were known; one in which the semiconductor laser as a light source is biased by a constant current and the light developed is externally modulated using an amplitude modulator that exhibits a linear modulation characteristic, the other in which so-called light feedforward (hereinafter FF) discussed in the paper "ANALOG TRANSMISSION OF TV-CHANNELS ON OPTICAL FIBER WITH NONLINEARITIES CORRECTION BY REGULATED FEEDFORWARD" by J.P. FRANKART et al. REV. H.F. ELECTRON TELECOMMUNICATION, VOL. 12, No. 9, 1984. In the feedforward system, the electrical signal to be transmitted is applied to the semiconductor laser. Part of the main optical signal through the semiconductor laser is compared with the original electrical signal to obtain a corresponding correction signal. Then, the modulation distortion produced in the semiconductor laser is suppressed by adding the correction signal thus obtained to the main optical signal to perform so-called feedforward control thereof.

It is theoretically possible to greatly reduce the modulation distortion if the aforementioned feedforward system is constructed as described. However, deterioration with age and environmental changes cause alterations in the light emitting characteristics of the light emitting means such as the semiconductor laser, especially the slope efficiency (coefficients of the first order terms of a function of the input current and the light output). In such cases, with the aforementioned light feedforward method, operating parameters that have been initially set to an ideal condition may deviate from that condition due to the changes in the characteristics, thereby increasing the modulation distortion. Conventionally, no practical measures have been taken against changes in the parameters of the light communication system due to such environmental changes, as it has not been possible to sufficiently suppress the modulation distortion.

In the feedforward system, since signal propagation time depends on transmission paths of the respective signals and signal processing mechanisms inserted therein, the difference in the signal propagation time should be taken into consideration. One problem which has been encountered in connection with the aforementioned light feedforward system where the correction signal is added to the main signal in order to eliminate the distortion modulation, is that signal delay due to such difference in signal propagation time causes insufficient suppression of the modulation distortion components or even may increase the distortion.

Therefore, in the light feedforward system, an electrical delay circuit is provided at a stage immediately before the signals are added together to thereby adjust the propagation time relative to each other. However, no investigation has been carried out for the signal delay, especially the range of delay and the accuracy of delay. For this reason, the modulation distortion could not be suppressed adequately.

Moreover, the signal delay is adjusted at the receiving end, requiring a large construction of the receiving station. The miniaturization of the receiving station has been difficult.

SUMMARY OF THE INVENTION

For overcoming the aforementioned drawbacks, the object of the present invention is to provide a light communication system and a light communication method employing the intensity modulation in which the parameters in the light communication system that imposes a maximum influence on the modulation distortion are monitored whenever necessary, and the operating parameters of the light communication system can be corrected in accordance with the parameters being monitored.

This object is solved by the features as claimed in claim 1.

The present invention provides an optical communication system for transmitting an optical signal directly intensity-modulated by an analog signal. The system comprises: a first branching means for branching the analog signal into a first signal and a second signal; a main light emitting means for intensity-modulating an optical signal with the first signal and outputting the modulated optical signal; a second branching means for branching the optical signal output from the main light emitting means into a first optical signal and a second optical signal; a first light receiving means for generating an electrical signal in accordance with the first optical signal; a second light receiving means for generating an electrical signal in accordance with the second optical signal; a comparison means for comparing the electrical signal from the first light receiving means and said second electrical signal, and outputting a comparison electrical signal; an auxiliary light emitting means for emitting an optical signal in accordance with the comparison electrical signal from the comparison means; a third light receiving means for producing an electrical signal in accordance with the optical signal from the auxiliary light emitting means; a superimposing means for superimposing the electrical signal from the second and third light receiving means; and an adjusting means for calculating parameters of an input/output characteristic of the auxiliary light emitting means to adjust operating parameters in the optical communication system.

The invention also provides an optical communication method. An analog signal is optically transmitted by directly intensity-modulating an optical signal using the analog signal. The method comprises the steps of: converting part of an optical signal, from a main light emitting means, that is intensity-modulated by a signal to be transmitted to an electrical signal; comparing the electrical signal with the signal to be transmitted and outputting a comparison result; intensity-modulating an optical signal with the comparison result and adding the optical signal intensity-modulated with the comparison result to part of the output of the main light emitting means; performing feedforward processing of the analog signal; and measuring characteristic parameters of a correction light emitting means whenever necessary, and updating operating parameters of the communication system whenever necessary on the basis of the characteristic parameters.

The optical communication system and method, according to the invention, employ the optical feedforward system. Feedback control is carried out in which the input current versus optical output characteristic of the light emitting means for correction that affects the modulation distortion most seriously, is monitored to correct the parameters of the communication system in accordance with the change in the input current versus optical output characteristic, thereby minimizing influences of the changes in characteristic of the semiconductor laser due to the environmental changes and also deterioration with age.

BRIEF DESCRIPTION OF THE DRAWINGS

Other objects, features and characteristics of the present invention, as well as functions of the related elements of the structure, and to the combination of parts and the economics of manufacture, will become apparent upon consideration of the following description and the appended claims with reference to the accompanying drawings, all of which form a part of this specification.

FIGURE 1 is a schematic block diagram of a first embodiment of an optical communication system according to the present invention;
FIGURE 2 is an illustrative diagram for discussing the principle of feedforward in the optical communication system shown in FIGURE 1;

FIGURE 3 illustrates a table for showing the influences of operating parameters of the respective structural elements on the modulation distortion in the optical communication system of FIGURE 1;

FIGURE 4 is a diagram for showing the temperature dependency of the characteristics of a semiconductor laser; and

FIGURE 5 is a diagram for explaining the effect of the optical communication system according to the present invention.

## DETAILED DESCRIPTION OF THE PRESENTLY PREFERRED EXEMPLARY EMBODIMENT

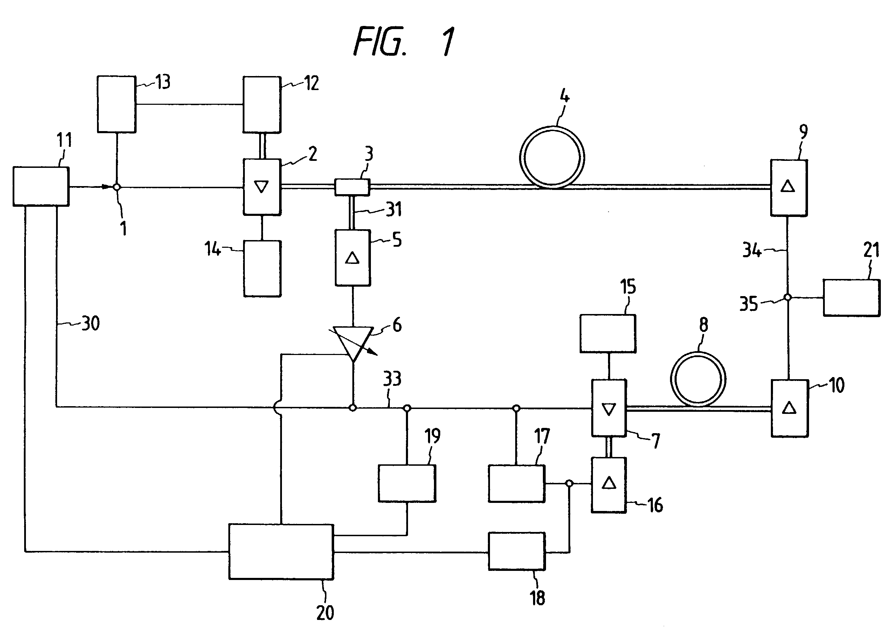

FIGURE 1 shows a general construction of an embodiment of an optical communication system according to the present invention.

The optical communication system shown in FIGURE 1 includes a main semiconductor laser 2 for directly intensity-modulating an optical signal by an analog signal to be transmitted, output from a signal generator 11, a main optical fiber line 4 for transmitting the intensity-modulated optical signal, and a main light receiving element 9 for demodulating the intensity-modulated optical signal into an electrical signal. The optical communication system is provided with a branching line 30 for branching part of the analog signal to be transmitted and a branching line 31 for branching part of the optical signal that is intensity-modulated by the semiconductor laser 2. The branching line 31 is provided with a branch element 3 for branching part of the optical signal, for example, half of the intensity-modulated optical signal, from the semiconductor laser 2 into the branching line 31 and the other half into the main optical fiber line 4.

Branching line 31 is connected to a first sublight receiving element 5 for demodulating the branched optical signal into an electrical signal, and an amplifier 6 for amplifying the demodulated signal by a predetermined amplification factor and then transmitting the amplified signal over the branching line 30. At a junction point of the branching line 30 and the branching line 31 a feedforward line 33 is connected that is provided with a subsemiconductor laser 7 for intensity-modulating the electrical signal into the optical signal. A suboptical fiber line 8 for transmitting the optical signal output from the subsemiconductor laser 7, and a second sublight receiving element 10 for demodulating the optical signal transmitted over the suboptical fiber line 8 into the electrical signal are attached to laser 7. The other end of the feedforward line 33 is connected to an output line 34 of the main light receiving element 9. A receiving unit 21 of the optical communication system of the first embodiment is connected to the junction point 35 of the output line 34 and the feedforward line 33.

The optical communication system is provided with a third sublight receiving element 16 which receives the light emitted from the subsemiconductor laser 7 and converts it into the electrical signal to measure the parameters such as the slope efficiency and the threshold current of the input current-optical output characteristic of the subsemiconductor laser 7. A current sweeping mechanism 19, capable of applying a sweeping current for inspection to the subsemiconductor laser 7, is provided off of line 33. Parameter calculation mechanism 18 for calculating parameters of the input current versus optical output characteristic is provided off of receiving element 16. The characteristic parameters of the subsemiconductor laser 7 are obtained by the parameter calculating mechanism 18 on the basis of the input current (sweeping current being applied) versus optical output (the output of the third sublight receiving element 16).

The optical communication system is provided with the signal generator 11 and a computer 20 for controlling the operating parameters of the optical communication system. For example, the amplification factor of the amplifier 6 is such that the aforementioned current sweeping mechanism 19 and the parameter calculating mechanism 18 are controlled by the signal generator 11 and the computer 20 so as to suppress the modulating distortion in accordance with the thus obtained parameters of the input current versus optical output characteristic of the subsemiconductor laser 7. That is, on the basis of the parameters obtained from the parameter calculating mechanism 18, a feedback control is performed for correcting the operating parameters of the optical communication system to suppress the modulation distortion. The calculation of the parameters and the feedback control based thereon are carried out whenever necessary, for example, with a predetermined time interval. The characteristics of a semiconductor laser generally vary with an ambient working temperature. For example, an InGaAsP Fabry-Perot semiconductor laser exhibits a change of 10% in the slope efficiency and a change of 30% in the threshold current when the ambient working temperature changes from 20 to 50°C. Thus temperature control mechanisms 14, 15, so-called automatic temperature control (ATC) circuits, are preferably connected to the main semiconductor laser 2 and the subsemiconductor laser 7, respectively, so that the temperature is maintained constant. Also, the characteristics of a semiconductor laser generally vary due to deterioration with age. For example, an InGaAsP Fabry-Perot semiconductor laser has been found to exhibit changes of more than 50% both in the slope efficiency and its threshold current over a ten-year use. Thus there is a possibility that the output of the semiconductor laser operating at a contrast current may possibly vary a lot. The optical communication is preferably provided with automatic power stabilizing mechanism 13, 17 or so-called automatic power control (APC) to stabilize the optical output so that the optical outputs from the rear surface of the main and subsemiconductor lasers are respectively monitored by a light receiving element 12 for monitoring and the third sublight receiving element 16 to thereby adjust the forward current for a constant optical output.

The principle of the aforementioned embodiment of the optical feedforward system has been discussed in detail in the previously mentioned documents.

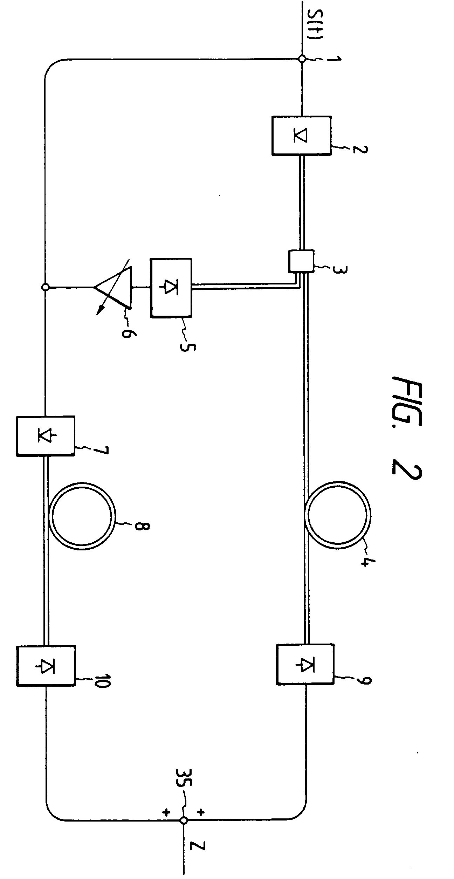

The reason why the characteristic parameters of the subsemiconductor laser, in particular, are measured whenever necessary and the measurement is fed back to the optical feedforward control, will be described with references to FIGURE 2-3.

FIGURE 2 illustrates a model system for investigating the optical feedforward control. In FIGURE 2, elements corresponding to elements in FIGURE 1 have identical reference designations.

We assume that the relationship of input current x versus optical outputs $O_1(x)$ of the main semiconductor laser 2, and $O_2(x)$ of the subsemiconductor laser 7 as follows:

$$O_1(x) = P_1(x - Ith_1) - Q_1(x - Ith_1)^2$$

$$O_2(x) = P_2(x - Ith_2) - Q_2(x - Ith_2)^2$$

where $P_1$, $P_2$, $Q_1$, $Q_2$ are characteristic parameters and $Ith_1$ and $Ith_2$ are threshold currents.

Assuming that branch ratio of the branch element 3 is 1:1, the output Y's corresponding to the inputs to the main light receiving element 9, the first sublight receiving element 5, and the second sublight receiving element 10, are respectively,

$$Y_1 = r_1 x$$

$$Y_2 = r_2 x$$

$$Y_3 = r_3 x$$

The amplification factor of the amplifier 6 is b, and the relationship of the output versus input x is expressed by

$$W = bx$$

Further assuming that a current $I_1 + k_1(t)$ flows through the branching point 1 into the main semiconductor laser 2 side and a current $I_2 + k_2(t)$ into the branching line 30 side, the output Z at the junction point 35 is given as a function of S(t) as follows:

$$Z = Z(S(t)) \tag{2}$$

If b, $k_1$, and $k_2$ are selected values thereof such that the coefficients of the terms other than the first order terms of S(t), i.e., those of non-linear terms, are zeroes, then

$$b = r_1 / (P_2 \times r_2 \times r_3) \tag{3}$$

$$(k_2/k_1) = \{(1/2)(P_1 \times r_1)\}/(P_2 \times r_3) \tag{4}$$

Thus the theory indicates that the modulation distortion can be suppressed by selecting the parameters as mentioned above.

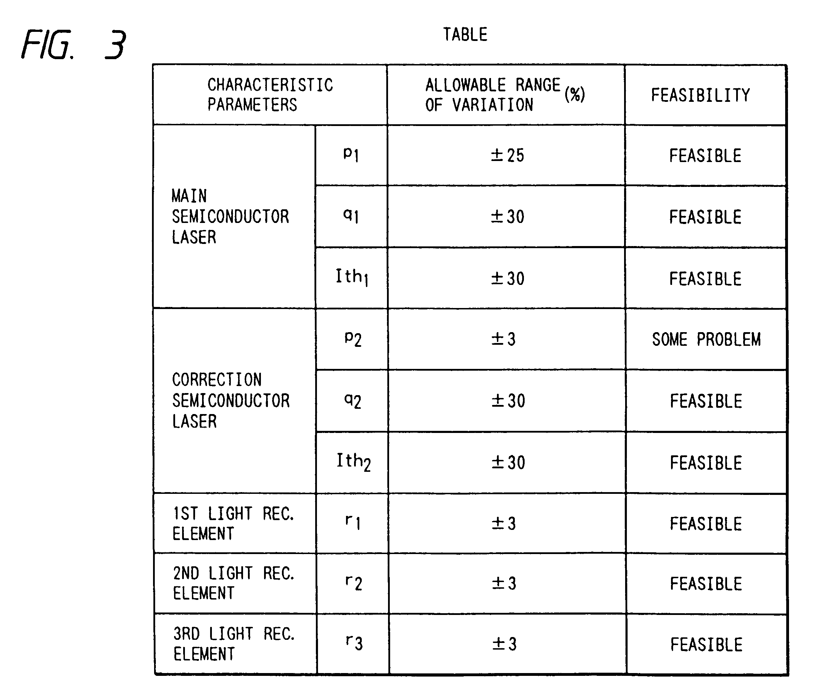

However, calculating the influence of the variations of the respective parameters of the first and second subsemiconductor lasers to the output Z(S(t)) using Eqs. (1) and (2) after the parameters as shown by Eqs. (3) and (4) have been set, yield the results shown in Fig. 3. This table shows an allowable range of variation in which the modulation distortion can be suppressed 15 dB less than that in the case where the feedforward is not applied. As is seen from the table, the parameter that affects the modulation distortion most significantly is the slope efficiency of the subsemiconductor laser 7 which must be corrected taking the stabilities of the respective elements into consideration. Thus in the optical communication system, the characteristic parameters of the subsemiconductor laser are monitored whenever necessary and the operating parameters of the optical communication system, for example, the amplification factor of the amplifier is corrected to efficiently suppress the modulation distortion in accordance with the variation of the parameters.

For such parameter variations of the subsemiconductor laser 7, especially for the variation of the slope efficiency, the aforementioned automatic optical output control mechanisms 13, 17 etc. cannot modify the variations and the amplitude output of the output signal from the semiconductor laser, which remains uncorrected. The optical feedforward method, too, cannot suppress the modulation distortion due to the variation of the slope efficiency.

An optical communication system according to the aforementioned embodiment was manufactured as an experiment with the following specifications and was compared with a prior art optical communication system which employs the feedforward method.

The main semiconductor laser 2 was constructed of an InGaAsP Fabry-Perot semiconductor laser having an oscillation wavelength of 1308 nanometers and the subsemiconductor laser 7 was formed of an InGaAsP Fabry-Perot semiconductor laser having an oscillation wavelength of 1314 nanometers. An InGaAs-PIN photodiode was used for the main light receiving element 9, the first, second, and third sublight receiving elements 5, 10, 16, and the light receiving element 12. The optical fiber lines 4, 8 are formed of a single mode optical fiber for 1.3 $\mu$m band having a 9 $\mu$m core

diameter and a 125 μm clad diameter. The video carrier of Channel 40 (channel: 4-12, M5-M10, S24-S33) was synthesized as a transmission signal. A spectrum analyzer was connected with the receiving unit 21. In transmission experiments, the temperature controlling mechanism 15 was used for varying the temperature environment of the subsemiconductor laser 7 to adjust the optical output characteristic so as to simulate deterioration of the optical output characteristic with age. The deterioration of the semiconductor with age exhibits a tendency similar to the case when the environmental temperature is raised. Thus the model was not subjected to actual deterioration with age in the experiment but rather the deterioration was simulated by varying the environment temperature. In the experiment, the optical communication system of the aforementioned embodiment was simulated by carrying out the following steps.

In step 1, the temperature controlling mechanism 15 was used to set the environment temperature of the subsemiconductor laser 2 to 0°C. In step 2, the input current versus optical output characteristic of the subsemiconductor laser 7 were measured to calculate the characteristic parameters, for example, the slope efficiency, the threshold current and so on. In step 3, the previously described parameters $k_1$, $k_2$, and b were set on the basis of the characteristic parameters obtained in step 2. Then in step 4, a signal was actually transmitted to measure the modulation distortion thereof.

The above-described steps 1-4 were then carried out while varying the temperature environment of the subsemiconductor laser 7. The environment temperature was increased in steps, for example 25°C, 50°C, 70°C so as to measure the modulation distortion at the respective temperatures.

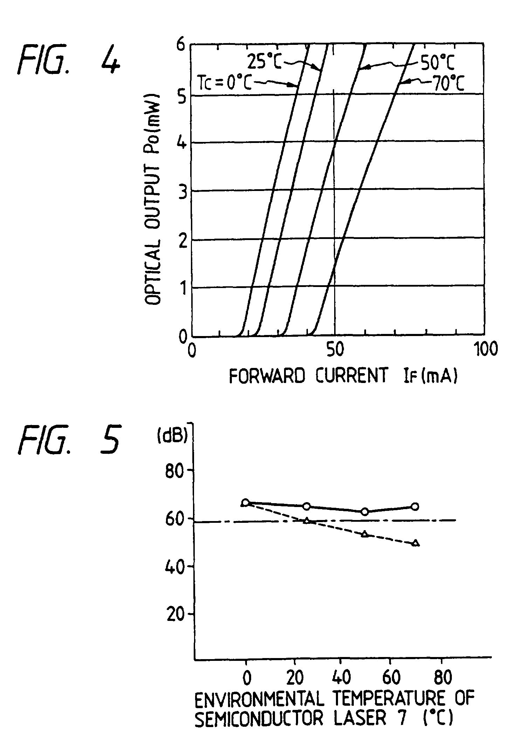

FIGURE 4 shows temperature dependency of the input current versus optical output characteristic of the subsemiconductor laser 7 obtained in this manner. The solid line in FIGURE 5 illustrates the values on the left-hand side of the Eq. (1) at the respective temperature. For the purpose of comparison, only step 4 was carried out for the conventional optical communication system and the values on the left-hand side of the Eq. (1) at that time are depicted by a dotted line in FIGURE 5. A dashed line in FIGURE 5 represents 58 dB, i.e., an allowable limit. As seen from FIGURE 5, the optical communication system according to the invention was verified to be capable of suppressing the modulation distortion against changes in characteristics of the subsemiconductor laser 7 due to the deterioration with age.

In a practical optical communication system, the environment temperature of the semiconductor laser is controlled with precision primarily by the temperature controlling mechanisms 14, 15 and the deterioration with age causes a change in the input current versus optical output characteristic. However, the degradation with age is a rather gradual change, thus the input current versus optical output characteristic of the subsemiconductor laser 7 may be measured automatically at a predetermined internal time, for example, a weekly or a monthly measurement to again set the operating parameters of the optical communication system. Thereby the optical feedforward at an optimum condition may be performed at all times.

The above-described embodiment of the invention is only exemplary and various modification may be made.

Specifically, while the input current versus optical output characteristic of the subsemiconductor laser 7 is measured whenever necessary and the characteristic parameters obtained are fed back to the optical feedforward control, the input versus optical output characteristic may be fed back to the main semiconductor laser 2 as well.

While the main optical fiber line 4 and the suboptical fiber line 8 are separately provided, a single fiber line may be shared by the main and sublines by using an optical synthesizer and a branch element.

Although the optical signals issued from the main semiconductor laser 2 and the subsemiconductor laser 7 are transmitted over the optical fiber lines 4, 8, respectively, and the optical signals are converted into the electrical signals by the main light receiving element 9 and the second sublight receiving element 10, respectively, and are then synthesized later, these optical signals may be synthesized and then converted into the electrical signals by a single light receiving element rather than being transmitted separately.

## Claims

1. An optical communication system for directly intensity-modulating an optical signal with an analog signal and transmitting the intensity-modulated optical signal, comprising:

   first branching means for branching said analog signal into a first electrical signal and a second electrical signal;

   main light emitting means (2) for intensity-modulating an optical signal with said first signal and outputting the modulated optical signal;

   second branching means (3) for branching said modulated optical signal outputted from said main light emitting means (2) into a first optical signal and a second optical signal;

   first light receiving means (5) for generating an electrical signal in accordance with said first optical signal;

auxiliary light emitting means (7) for emitting an optical signal in accordance with a comparison electrical signal;

comparison means (33) for comparing said electrical signal from said first light receiving means (5) and said second electrical signal, and outputting said comparison electrical signal; and

second light receiving means (9) for superimposing said second optical signal and said optical signal from said auxiliary light emitting means (7), and generating an electrical signal in accordance with said superimposed optical signal;

**characterized by**

adjusting means (18,19) for calculating parameters of an input/output characteristic of said auxiliary light emitting means (7) to adjust operating parameters in said optical communication system.

2. An optical communication system according to claim 1, wherein said second light receiving means (9) generates an electrical signal in accordance with said second optical signal;

third light receiving means (10) produces an electrical signal in accordance with said optical signal from said auxiliary light emitting means (7); and

superimposing means (35) superimposes the electrical signals from said second and third light receiving means (9,10).

3. An optical communication system according to claim 1 or 2, wherein said adjusting means (18,19) further comprises:

sweep means (19) for sweeping an input current into said fourth light receiving means (16) for receiving the optical signal in accordance with said input current from said sweep means (19) and for generating a current in accordance with the optical signal; and

arithmetic operating means (18) connected to said fourth light receiving means (16) and said sweep means (19) for calculating parameters of an input/output characteristic of said auxiliary light emitting means (7).

4. An optical communication system according to one of claims 1 to 3, wherein said parameters of the input/output characteristic are a threshold current and a slope efficiency.

5. An optical communication method in which an analog signal is optically transmitted by directly intensity-modulating an optical signal by the analog signal, comprising the steps of:

converting part of an optical signal from a main light emitting means (2), which is intensity-modulated by said analog signal into an electrical signal;

comparing said electrical signal with said analog signal and outputting a comparison result;

intensity-modulating an optical signal with the comparison result and adding the intensity-modulated optical signal to part of the output of said main light emitting means (2); and

performing feed forward processing of the analog signal;

**characterized by**

measuring characteristic parameters of a correction light emitting means (7) whenever necessary, and updating operating parameters of a communication system whenever necessary on the basis of the measured characteristic parameters.

**Patentansprüche**

1. Optisches Übertragungssystem zum direkten Intensitätsmodulieren eines optischen Signals mit einem Analogsignal und Aussenden des intensitätsmodulierten optischen Signals mit:

einer ersten Verzweigungseinrichtung zum Verzweigen des Analogsignals in ein erstes elektrisches Signal und ein zweites elektrisches Signal;

einer lichtemittierenden Haupteinrichtung (2) zum Intensitätsmodulieren eines optischen Signals mit dem ersten Signal und Ausgeben des modulierten optischen Signals;

einer zweiten Verzweigungseinrichtung (3) zum Verzweigen des modulierten optischen Signals, das von der Haupteinrichtung (2) ausgegeben wird, in ein erstes optisches Signal und ein zweites optisches Signal;

einer ersten Lichtempfangseinrichtung (5) zum Erzeugen eines elektrischen Signals nach Maßgabe des ersten optischen Signals;

einer lichtemittierenden Hilfseinrichtung (7) zum Emittieren eines optischen Signals nach Maßgabe eines elektrischen Vergleichssignals;

einer Vergleichseinrichtung (33) zum Vergleichen des elektrischen Signals von der ersten Lichtempfangseinrichtung (5) und des zweiten elektrischen Signals und zum Ausgeben des elektrischen Vergleichssignals und

einer zweiten Lichtempfangseinrichtung (10) zum Überlagern des zweiten optischen Signals und des optischen Signals von der Hilfseinrichtung (7) und zum Erzeugen eines elektrischen Signals nach Maßgabe des überlagerten optischen Signals;

**gekennzeichnet durch**

eine Einstelleinrichtung (18, 19) zum Berechnen von Parametern einer Eingangs/Ausgangs-Kennlinie der lichtemittierenden Hilfseinrichtung (7) zum Einstellen der Betriebsparameter in dem optischen Übertragungssystem.

2. Optisches Übertragungssystem nach Anspruch 1, wobei die zweite Lichtempfangseinrichtung (10) ein elektrisches Signal nach Maßgabe des zweiten optischen Signals erzeugt;

eine dritte Lichtempfangseinrichtung (16) ein elektrisches Signal nach Maßgabe des optischen Signals von der lichtemittierenden Hilfseinrichtung (7) erzeugt und

eine Überlagerungseinrichtung (35) die elektrischen Signale von der zweiten und der dritten Lichtempfangseinrichtung (10, 16) überlagert.

3. Optisches Übertragungssystem nach Anspruch 1 oder 2, wobei die Einstelleinrichtung (18, 19) außerdem aufweist:

eine Durchlaufeinrichtung (19) zum Durchlaufen eines Eingangsstroms für die dritte Lichtempfangseinrichtung (16) zum Empfangen des optischen Signals nach Maßgabe dieses Eingangsstroms von der Durchlaufeinrichtung (19) und zum Erzeugen eines Stroms nach Maßgabe des optischen Signals, und

eine arithmetische Operationseinrichtung (18), die mit der dritten Lichtempfangseinrichtung (16) und der Durchlaufeinrichtung (19) zum Berechnen von Parametern einer Eingangs/Ausgangs-Kennlinie der lichtemittierenden Hilfseinrichtung (7) verbunden ist.

4. Optisches Übertragungssystem nach einem der Ansprüche 1 bis 3, wobei die Parameter der Eingangs/Ausgangs-Kennlinie ein Schwellenstrom und ein Neigungswirkungsgrad sind.

5. Optisches Übertragungsverfahren, bei dem ein Analogsignal durch direktes Intensitätsmodulieren eines optischen Signals mit dem Analogsignal optisch übertragen wird, mit den Schritten:

Umformen eines Teils eines optischen Signals von einer lichtemittierenden Haupteinrichtung (2), das mit dem Analogsignal intensitätsmoduliert ist, in ein elektrisches Signal;

Vergleichen des elektrischen Signals mit dem Analogsignal und Ausgeben eines Vergleichsergebnisses;

Intensitätsmodulieren eines optischen Signals mit dem Vergleichsergebnis und Addieren des intensitätsmodulierten optischen Signals zu einem Teil der Ausgangsgröße der lichtemittierenden Haupteinrichtung (2), und

Ausführen einer Vorwärtskopplungsverarbeitung des Analogsignals;

**gekennzeichnet durch**

Messen von Kennlinienparametern einer lichtemittierenden Korrektureinrichtung (7), wenn immer dieses notwendig ist, und Aktualisieren der Betriebsparameter eines Übertragungssystems, wenn immer dieses notwendig ist, aufgrund der gemessenen Kennlinienparameter.

## Revendications

1. Système de télécomunications optiques pour moduler directement en intensité un signal optique par un signal analogique et transmettre le signal optique modulé en intensité, comprenant:

   - des premiers moyens de dérivation pour diviser ledit signal analogique en un premier signal électrique et un deuxième signal électrique;
   - des moyens émetteurs de lumière principale (2) pour moduler en intensité un signal optique par ledit premier signal et fournir en sortie le signal optique modulé;
   - des deuxièmes moyens de dérivation (3) pour diviser ledit signal optique modulé fourni en sortie par lesdits moyens émetteurs de lumière principale (2) en un premier signal optique et un deuxième signal optique;
   - des premiers moyens récepteurs de lumière (5) pour produire un signal électrique en fonction dudit premier signal optique;
   - des moyens émetteurs de lumière auxiliaire (7) pour émettre un signal optique selon un signal électrique de comparaison;
   - des moyens de comparaison (33) pour comparer ledit signal électrique issu desdits premiers moyens récepteurs de lumière (5) et ledit deuxième signal électrique, et fournir ledit signal électrique de comparaison; et
   - des deuxièmes moyens récepteurs de lumière (10) pour superposer ledit deuxième signal optique et ledit signal optique issu desdits moyens émetteurs de lumière auxiliaire (7), et produire un signal électrique en fonction dudit signal optique superposé,
       caractérisé par:
   - des moyens de réglage (18, 19) pour calculer des paramètres d'une caractéristique entrée-sortie desdits moyens émetteurs de lumière auxiliaire (7) pour régler des paramètres de fonctionnement dudit système de télécommunications optiques.

2. Système de télécommunications optiques selon la revendication 1, dans lequel:

   - lesdits deuxièmes moyens récepteurs de lumière (10) produisent un signal électrique en fonction dudit deuxième signal optique;
   - des troisièmes moyens récepteurs de lumière (16) produisent un signal électrique en fonction dudit signal optique issu desdits moyens émetteurs de lumière auxiliaire (7); et
   - des moyens de superposition (35) superposent les signaux électriques issus desdits deuxièmes et troisièmes moyens récepteurs de lumière (10, 16).

3. Système de télécommunications selon la revendication 1 ou 2, dans lequel lesdits moyens de réglage (18, 19) comprennent en outre:

   - des moyens de balayage (19) pour balayer en intensité un courant d'entrée dans lesdits troisièmes moyens récepteurs de lumière (16) pour recevoir le signal optique selon ledit courant d'entrée issu desdits moyens de balayage (19) et pour produire un courant en fonction du signal optique; et
   - des moyens d'opérations arithmétiques (18) connectés auxdits troisièmes moyens récepteurs de lumière (16) et auxdits moyens de balayage (19) pour calculer des paramètres d'une caractéristique entrée-sortie desdits moyens émetteurs de lumière auxiliaire (7).

**4.** Système de télécommunications optiques selon l'une des revendications 1 à 3, dans lequel lesdits paramètres de la caractéristique entrée-sortie sont un courant de seuil et une pente de rendement.

**5.** Procédé de télécommunications optiques, dans lequel un signal analogique est transmis optiquement en modulant directement en intensité un signal optique par le signal analogique, le procédé comprenant les étapes consistant à:

- convertir une partie d'un signal optique issu de moyens émetteurs de lumière principale (2), qui est modulé en intensité par ledit signal optique, en un signal électrique;
- comparer ledit signal électrique audit signal analogique et fournir un résultat de comparaison;
- moduler en intensité un signal optique par le résultat de la comparaison et ajouter le signal optique modulé en intensité à une partie du signal de sortie desdits moyens émetteurs de lumière principale (2); et
- exécuter un traitement à anticipation du signal analogique;
    caractérisé en ce qu'il comprend l'étape consistant à:
- mesurer des paramètres caractéristiques de moyens émetteurs de lumière de correction (7) chaque fois que cela est nécessaire et mettre à jour les paramètres de fonctionnement d'un système de télécommunications chaque fois que cela est nécessaire sur la base des paramètres caractéristiques mesurés.

FIG. 1

S(t)

FIG. 2

EP 0 370 514 B1

## FIG. 3

TABLE

| CHARACTERISTIC PARAMETERS | | ALLOWABLE RANGE (%) OF VARIATION | FEASIBILITY |
|---|---|---|---|
| MAIN SEMICONDUCTOR LASER | $p_1$ | ±25 | FEASIBLE |
| | $q_1$ | ±30 | FEASIBLE |
| | $Ith_1$ | ±30 | FEASIBLE |
| CORRECTION SEMICONDUCTOR LASER | $p_2$ | ±3 | SOME PROBLEM |
| | $q_2$ | ±30 | FEASIBLE |
| | $Ith_2$ | ±30 | FEASIBLE |
| 1ST LIGHT REC. ELEMENT | $r_1$ | ±3 | FEASIBLE |
| 2ND LIGHT REC. ELEMENT | $r_2$ | ±3 | FEASIBLE |
| 3RD LIGHT REC. ELEMENT | $r_3$ | ±3 | FEASIBLE |

FIG. 4

FIG. 5